# EUROPÄISCHE PATENTSCHRIFT

(11) **EP 0 643 655 B1**
(45) Veröffentlichungstag und Bekanntmachung des Hinweises auf die Patenterteilung: **03.01.1996**
(21) Anmeldenummer: 93912576.1
(22) Anmeldetag: 08.06.1993
(51) Int. Cl.: B62J 9/00

(54) **HALTERUNG FÜR TASCHEN AN FAHRRÄDERN, MOTORRÄDERN ODER DERGLEICHEN**
DEVICE FOR HOLDING BAGS ON BICYCLES, MOTORBICYCLES OR THE LIKE
FIXATION POUR SACOCHE DE BICYCLETTE, MOTOCYCLETTE OU VEHICULE SIMILAIRE

(30) Priorität: 09.06.1992 DE 9207525 U
(43) Veröffentlichungstag der Anmeldung: 22.03.1995
(73) Patentinhaber: ORTLIEB, Hartmut, D-90431 Nürnberg (DE)
(72) Erfinder: ORTLIEB, Hartmut, D-90431 Nürnberg (DE)
(74) Vertreter: Merten, Fritz
(86) Internationale Anmeldenummer: DE9300500
(87) Internationale Veröffentlichungsnummer: WO9325430

(56) Entgegenhaltungen:
- DE-A- 3 151 794
- DE-A- 3 927 086

## Beschreibung

Die Erfindung betrifft eine Halterung für Taschen an Fahrrädern, Motorrädern oder dergleichen mit den Merkmalen des Oberbegriffs des Anspruchs 1.

Eine derartige Halterung, bei der an der Tasche mindestens ein Befestigungsclip angeordnet ist, der um eine Stange eines Gepäckträgers, um den Lenker oder eine andere Strebe des Fahrrads, Motorrads oder dergleichen schließbar und gegen die Kraft einer Feder von der Stange des Gepäckträgers oder dem Lenker lösbar ist, ist beispielsweise aus der DE 39 27 086 A1 bekannt. Nachteilig ist hier, daß das Anbringen und Abnehmen der Tasche in der Regel eine zusätzliche Betätigung der Federn von Hand erfordert, und daß die Lage des Taschenschwerpunkts, bedingt durch die Anbringung der Halterung, ungünstig ist.

Aufgabe der vorliegenden Erfindung ist es daher, eine Halterung für Taschen an Fahrrädern, Motorrädern oder dergleichen zu schaffen, die einfach auf die Stange eines Gepäckträgers, den Lenker oder eine andere Strebe aufgesteckt und wieder abgenommen werden kann und die die Wahl eines günstigen Taschenschwerpunkts ermöglicht, so daß bei der Befestigung von Packtaschen diese nur gering über die Gepäckträgerauflage hinausragen, was auch günstig für eine zusätzliche Bepackung ist.

Diese Aufgabe wird mit den im kennzeichnenden Teil des Anspruchs 1 genannten Merkmalen gelöst. Fortbildungen und besondere Ausführungen der Erfindung sind in den weiteren Ansprüchen umfaßt.

Erfindungsgemäß greift bei einer Tasche der eingangs geschilderten Art der Befestigungsclip an seiner der Tasche abgewandten Seite mit einem Haltehaken über die Stange, bzw. den Lenker oder die Strebe und weist einen Schnapphaken auf, welcher um eine Achse, oder einen oder zwei Achsstummel gegen die Kraft der Feder drehbar an diesem gelagert ist und welcher unter Einwirkung der Federkraft die Stange oder den Lenker von der Seite der Tasche aus von unten umgreift. Der Schnapphaken ist an seiner der Tasche zugewandten Seite mit einem Gurtband, einem Tragegriff oder dergleichen verbunden. Durch Zug an dem Gurtband, dem Tragegriff oder dergleichen, wird eine Kraft auf die Feder ausgeübt und der Schnapphaken um die Achse oder den oder die Achsstummel am Befestigungsclip bewegt und gibt so die Stange oder den Lenker frei. Dadurch, daß der Schnapphaken von außen schließt, ist es möglich, die Halterung auch bei sog. Low-Rider-Fahrrädern anzubringen, die damit praktisch universell einsetzbar ist.

Die Feder kann eine Schenkel- oder Blattfeder oder ein elastisches Element oder dergleichen sein und stützt sich einerseits an dem Befestigungsclip und andererseits an dem Schnapphaken ab.

Vorteilhafterweise weist der Schnapphaken an seiner unteren Seite eine Anlaufschräge auf, die derart ausgerichtet ist, daß im geschlossenen Zustand eine von unten auf die Anlaufschräge wirkende Kraft, z.B. beim Aufsetzen auf eine Stange, einen Lenker oder eine andere Strebe, den Schnapphaken gegen die Kraft der Feder zurückdreht.

Nach einer bevorzugten Ausführung der Erfindung geht der Befestigungsclip an seiner der Stange, dem Lenker oder der Strebe abgewandten Seite in zwei in einem Abstand voneinander angeordnete Schenkel über, zwischen denen der Schnapphaken Schenkeln drehbar gelagert ist.

Das Gurtband oder ein Lappen oder dergleichen des Tragegriffs ist vorteilhafterweise mittels einer selbstschneidenden Kunststoffschraube in einem Schlitz im Schnapphaken.

Nach einer bevorzugten Ausführung der Erfindung ist der Befestigungsclip auf seiner der Tasche zugewandten Seite durch ein Halteteil verlängert und die Tasche weist eine parallel zu der Stange, dem Lenker oder der Strebe ausgerichtete Halteschiene mit einer Ausnehmung, zum Beispiel einem Langloch, auf, in der das Halteteil befestigt ist.

Dies kann dadurch erfolgen, daß das Halteteil eine Bohrung aufweist und daß die Befestigung an der Halteschiene mittels einer Schraube erfolgt, die durch die Bohrung in die Ausnehmung in der Schiene ragt und dort mit einer Mutter verschraubt ist.

Die Schiene ist vorteilhafterweise ein etwa halbrundes Hohlprofil, dessen offene Seite der Tasche zugewandt ist und innere Verstärkungsrippen aufweist, wobei die Mutter mit abgewinkelten Flanschteilen hinter die Verstärkungsrippen greift.

Nach einer bevorzugten Ausführung der Erfindung weist die Halteschiene an ihrer oberen Kante einen Haltesteg auf und der Befestigungsclip hat im Bereich des Übergangs zum Halteteil eine Haltekralle, wobei die Haltekralle über den Haltesteg greift, wenn der Befestigungsclip an der Halteschiene befestigt ist.

Vorteilhafterweise ist das Gurtband, der Tragegriff oder dergleichen mit zwei in einem Abstand zueinander angeordneten Befestigungsclips verbunden, so daß ein Lösen einer Tasche mit zwei Befestigungsclips mittels eines Zugs am Gurtband möglich ist.

Im Folgenden wird eine beispielhafte Ausführung der Erfindung anhand von Zeichnungen näher erläutert. Dabei zeigen:
- Fig. 1): eine Ansicht der vollständigen Halterung ohne Tasche;
- Fig. 2): einen Schnitt durch die Halteschiene in der Ebene II - II;
- Fig. 3): einen Schnitt durch die Halteschiene in der Ebene III - III:
- Fig. 4): eine Mutter;
- Fig. 5): einen Schnitt durch die Halteschiene in der Ebene V - V;
- Fig. 6): einen Drehbolzen;
- Fig. 7): eine Sicht auf einen Befestigungsclip von vorne;
- Fig. 8): eine Seitenansicht des Befestigungsclips im geschlossenen Zustand;
- Fig. 9): eine Seitenansicht des Befestigungsclips im geöffneten Zustand.

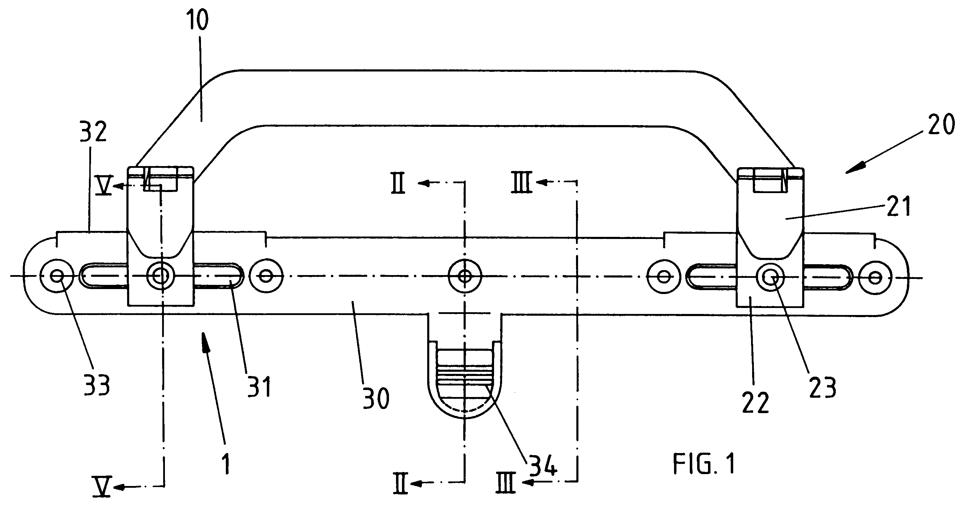

Die Halterung 1 gemäß Fig. 1 besteht aus den hauptsächlichen Bauteilen Tragegurt 10, Befestigungsclips 20 und gegebenenfalls Halteschiene 30. Die Halteschiene 30 ist mit der, hier nicht dargestellten, Tasche, z.B. durch Nieten in den Bohrungen 33 verbunden. Die Halteschiene 30 ist ein längliches, etwa halbrundes Hohlprofil, dessen Hohlraum zur Tasche hin ausgerichtet ist. Zur Befestigung der beiden Befestigungsclips 20 weist die Halteschiene 30 Langlöcher 31 auf, in die die Befestigungsclips 20 mittels Schrauben und Muttern festgelegt sind. Die Befestigungsclips weisen hierfür Bohrungen 23 auf. Die Langlöcher 31 gewähren eine Einstellbarkeit für verschiedene Längen von Stangen oder Streben. In der Mitte der Halteschiene 30 ist eine Klemmschnalle 34 angespritzt. Von den Befestigungsclips 20 sind hier die Haltehaken 21, die über die Stange, den Lenker oder die Strebe greift und die Halteteile 22 zur Befestigung an der Halteschiene 30 zu erkennen. Die Halteschiene 30 weist für die Befestigungsclips 20 weiter Haltestege 32 auf.

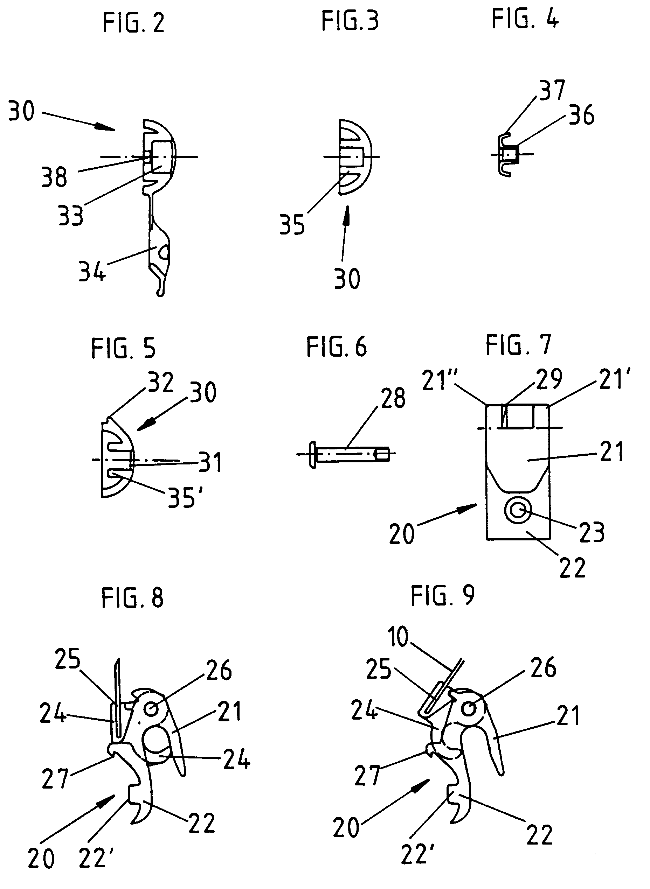

Die Halteschiene 30 ist in den Fig. 2 bis 5 in mehreren Ebenen geschnitten dargestellt, wobei Fig. 4 lediglich die Mutter 36 für die Schraube des Befestigungsclips 20 zeigt. In Fig. 2, d.h. in der Ebene II - II, ist die Halteschiene 30 mit einem Sackloch 33 und einer Bohrung 38 versehen, die die Verbindungsniete zur Tasche aufnehmen sollen. An die Halteschiene 30 ist nach unten die Klemmschnalle 34 angespritzt. Fig. 3, d.h. Ebene III - III zeigt die Struktur, die die Halteschiene 30 über den größten Teil ihrer Länge aufweist. Die Halteschiene 30 ist hier mit zwei längs verlaufenden Verstärkungsrippen 35 versehen. Im Bereich der Langlöcher 31 sind die Verstärkungsrippen 35' verkürzt, wie Fig. 5 offenbart und nehmen dort die Mutter 36 auf, die mit abgewinkelten Flanschteilen 37 hinter die Verstärkungsrippen 35' greift und die durch die Verkürzung der Verstärkungsrippen 35' bündig mit der Grundfläche der Halteschiene 30 ist. Im Bereich der Verbindung mit den Befestigungsclips 20 sind die Haltestege 32 der Halteschienen 30 angeordnet.

Die Funktion des Befestigungsclips 20 geht aus den Fig. 6 bis 9 hervor, wobei Fig. 6 lediglich den Drehbolzen 28 zeigt, der im Befestigungsclip 20 eingeschraubt ist und um den sich der Schnapphaken 24 dreht. Der Befestigungsclip 20 weist an seiner der Tasche abgewandten Seite den Haltehaken 21 auf, der über die Stange, Strebe oder den Lenker greift. Im oberen Bereich weist der Haltehaken 21, bzw. der Befestigungsclip 20 zwei in einem Abstand angeordnete Schenkel 21', 21'' auf, zwischen denen der obere Teil des Schnapphakens 24 drehbar auf dem Drehbolzen 28 gelagert ist, der in Bohrungen 26 der Schenkel 21', 21'' liegt, bzw. dort verschraubt ist. Der Schnapphaken 24 ist gegenüber dem Befestigungsclip 20 gefedert gelagert, wobei eine Schenkelfeder 29 den unteren, hakenförmigen Teil des Schnapphakens 24 von der Tasche weg und von unten um die Stange, Strebe oder den Lenker herumzudrücken trachtet. An seinem oberen Teil ist der Schnapphaken 24 mit einem Schlitz 25 versehen, der den Tragegurt 10 aufnimmt, der hier z.B. festgeschraubt ist. Wird eine Zugkraft mittels des Tragegurts 10 auf den Schnapphaken 24 ausgeübt, so dreht sich dieser entgegen der Kraft der Feder um den Drehbolzen 28, wobei das hakenförmige Teil die Stange, Strebe oder den Lenker freigibt und die Tasche abgenommen werden kann. Die Halterung ist so ausgelegt, daß bereits das Gewicht der Tasche ausreicht, um den Schnapphaken geöffnet zu halten. Um die Öffnung ggf. dennoch zu unterstützen, weist der Schnapphaken 24 an seiner unteren Seite eine Anlaufschräge auf, die derart ausgerichtet ist, daß im geschlossenen Zustand eine von unten auf die Anlaufschräge wirkende Kraft, z.B. beim Aufsetzen auf eine Stange, einen Lenker oder eine andere Strebe, den Schnapphaken 24 gegen die Kraft der Feder 29 zurückdreht. Nach unten ist der Befestigungsclip 20 zur Verbindung mit der Halteschiene 30 mit einem Halteteil 22 verlängert. Das Halteteil 22 weist eine nutensteinartige, zur Halteschiene hin gerichtete Verstärkung 22' auf, die die Bohrung für die Verbindungsschraube zur Mutter aufnimmt. An ihrem oberen Ende ist das Halteteil 22 mit einer Haltekralle 27 versehen, die hinter die Haltestege der Halteschiene greift, wenn die Halterung auf die Halteschiene geschraubt ist.

## Patentansprüche

1. Halterung (1) für Taschen an Fahrrädern, Motorrädern oder dergleichen,
wobei an der Tasche mindestens ein Befestigungsclip (20) anzuordnen ist,
wobei der Befestigungsclip um eine Stange eines Gepäckträgers, um den Lenker oder eine andere Strebe des Fahrrads, Motorrads oder dergleichen schließbar ist,
und wobei der Befestigungsclip gegen die Kraft einer Feder (29) von der Stange des Gepäckträgers oder dem Lenker oder einer anderen Strebe lösbar ist,
**dadurch gekennzeichnet**,
daß der Befestigungsclip (20) an seiner der Tasche abgewandten Seite mit einem Haltehaken (21) über die Stange, bzw. den Lenker oder die Strebe greift,
daß der Befestigungsclip (20) einen Schnapphaken (24) aufweist, welcher um eine Achse oder einen oder zwei Achsstummel gegen die Kraft der Feder (29) drehbar an diesem gelagert ist und welcher unter Einwirkung der Federkraft die Stange oder den Lenker von der Seite der Tasche aus von unten umgreift,
daß der Schnapphaken (24) an seiner der Tasche zugewandten Seite mit einem Gurtband (10), einem Tragegriff oder dergleichen verbunden ist,
und daß durch einen Zug an dem Gurtband (10), dem Tragegriff oder dergleichen eine Kraft auf die Feder (29) ausgeübt wird und der Schnapphaken (24) um die Achse oder den oder die Achsstummel am Befestigungsclip (20) bewegt wird und die Stange oder den Lenker freigibt.

2. Halterung nach Anspruch 1,
**dadurch gekennzeichnet**,
daß die Feder (29) eine Schenkel- oder Blattfeder oder ein elastisches Element oder dergleichen ist, welche, bzw. welches sich einerseits an dem Befestigungsclip (20) und andererseits an dem Schnapphaken (24) abstützt.

3. Halterung nach Anspruch 1 oder 2,
**dadurch gekennzeichnet**,
daß der Schnapphaken (24) an seiner unteren Seite eine Anlaufschräge aufweist, die derart ausgerichtet ist, daß im geschlossenen Zustand eine von unten auf die Anlaufschräge wirkende Kraft, z.B. beim Aufsetzen auf eine Stange, einen Lenker oder eine andere Strebe, den Schnapphaken (24) gegen die Kraft der Feder (29) zurückdreht.

4. Halterung nach Anspruch 1,
**dadurch gekennzeichnet**,
daß der Befestigungsclip (20) an seiner der Stange, dem Lenker oder der Strebe abgewandten Seite in zwei in einem Abstand voneinander angeordnete Schenkel (21', 21'') übergeht,
und daß der Schnapphaken (24) zwischen den Schenkeln (21', 21'') drehbar gelagert ist.

5. Halterung nach Anspruch 1,
**dadurch gekennzeichnet**,
daß das Gurtband (10) oder ein Lappen oder dergleichen des Tragegriffs mittels einer selbstschneidenden Kunststoffschraube in einem Schlitz (25) im Schnapphaken (24) befestigt ist.

6. Halterung nach Anspruch 1 oder 4,
**dadurch gekennzeichnet**,
daß der Befestigungsclip (20) auf seiner der Tasche zugewandten Seite durch ein Halteteil (22) verlängert ist,
daß die Tasche eine parallel zu der Stange, dem Lenker oder der Strebe ausgerichtete Halteschiene (30) aufweist,
und daß das Halteteil (22) in einer Ausnehmung (31) der Halteschiene (30) befestigt ist.

7. Halterung nach Anspruch 6,
**dadurch gekennzeichnet**,
daß das Halteteil (22) eine Bohrung (23) aufweist, und daß die Befestigung an der Halteschiene (30) mittels einer Schraube erfolgt, die durch die Bohrung (23) in die Ausnehmung (31) in der Schiene (30) ragt und dort mit einer Mutter (36) verschraubt ist.

8. Halterung nach Anspruch 7,
**dadurch gekennzeichnet**,
daß die Schiene (30) ein etwa halbrundes Hohlprofil ist, dessen offene Seite der Tasche zugewandt ist, daß das Hohlprofil innere Verstärkungsrippen (35) aufweist,
und daß die Mutter (36) mit abgewinkelten Flanschteilen (37) hinter die Verstärkungsrippen (35) greift.

9. Halterung nach Anspruch 8,
**dadurch gekennzeichnet**,
daß die Ausnehmung (31) in der Halteschiene (30) ein Langloch ist.

10. Halterung nach Anspruch 6,
**dadurch gekennzeichnet**,
daß die Halteschiene (30) an ihrer oberen Kante einen Haltesteg (32) aufweist,
daß der Befestigungsclip (20) im Bereich des Übergangs zum Halteteil (22) eine Haltekralle (27) aufweist,
und daß die Haltekralle (27) über den Haltesteg (32) greift, wenn der Befestigungsclip (20) an der Halteschiene (30) befestigt ist.

11. Halterung nach Anspruch 1,
**dadurch gekennzeichnet**,
daß das Gurtband (10), der Tragegriff oder dergleichen mit zwei in einem Abstand zueinander angeordneten Befestigungsclips (20) verbunden ist.

## Claims

1. A holding device (1) for bags on bicycles, motorcycles or the like, whereby at least one attachment clip (20) is locatable on the bag and lockable around a bar of a luggage carrier, the handlebar or any other strut of the bicycle, motorcycle or the like, the attachment clip being separable, by movement against the force of a spring (29), from the bar of the luggage carrier or the handlebar or other strut, characterised in that the attachment clip (20), on its side facing away from the bag, engages over the bar, alternatively the handlebar or the strut by means of a holding hook (21), in that the attachment clip (20) includes a snap-action hook (24) which is rotatably mounted on said clip for movement against the force of the spring (29) around an axle or around one or two stub axles and which, by the effect of the force of the spring, engages from below, as seen from the bag side, around the bar or the handlebar, in that the snap-action hook (24), on its side facing the bag, is connected to a webbing strap (10), a carrying handle or the like, and in that when a force is exerted on the spring (29) by means of a tension on the webbing strap (10) or the carrying handle or the like, the snap-action hook (24) is moved around the axle or one or more stub-axles on the attachment clip and releases the bar or the handlebar.

2. A holding device according to Claim 1, characterised in that the spring (29) is an elbow- or plate-spring or flexible element or the like, which is supported on its or, as the case may be, their one side on the attachment clip (20) and on the other side on the snap-action hook (24).

3. A holding device according to Claim 1 or 2, characterised in that the snap-action hook (24) includes on its lower side an inclined abutment which is arranged in such a way that, in a closed state, a force acting from below on to the inclined abutment, for example, when being put into place on a bar, a handlebar or other strut, rotates the snap-action hook (24) back against the force of the spring (29).

4. A holding device according to Claim 1, characterised in that the attachment clip (20), on its side facing away from the bar, handlebar or strut, divides into two arms (21',21'') located at a clearance distance from each other, and that the snap-action hook (24) is rotatably mounted between the arms (21', 21'').

5. A holding device according to Claim 1, characterised in that the webbing strap (10) or a flap or the like of the carrying handle is attached within a slit (25) in the snap-action hook (24) by means of a self-tapping plastics screw.

6. A holding device according to Claim 1 or 4, characterised in that the attachment clip (20) is extended on its side facing the bag by a holding part (22), in that the bag includes a holding rail (30) arranged parallel to the bar, handlebar or strut, and in that the holding part (22) is attached within a recess (31) of the holding rail (30).

7. A holding device according to Claim 6, characterised in that the holding part (22) includes a drilled hole (23) and in that the attachment to the holding rail (30) is effected by means of a screw which projects through the drilled hole (23) into the recess (31) in the rail (30) and is screwed there to a nut (36).

8. A holding device according to Claim 7, characterised in that the rail (30) has a somewhat semi-circular hollow profile the open side of which faces the bag, in that the hollow profile comprises internal reinforcement ribs (35) and in that the nut (36) engages behind the reinforcement ribs (35) by means of its angled flange-sections (37).

9. A holding device according to Claim 8, characterised in that the recess (31) in the holding rail (30) is an elongated hole.

10. A holding device according to Claim 6, characterised in that the holding rail (30) includes a holding side-bar (32) on its upper edge, in that the attachment clip (20) comprises a holding claw (27) in the region of transition to the holding part (22), and in that the holding claw (27) engages over the holding side-bar (32) when the attachment clip (20) is attached to the holding rail (30).

11. A holding device according to Claim 1, characterised in that the webbing strap (10), the carrying handle or the like, is connected to two attachment clips (20) located at a clearance distance from each other.

## Revendications

1. Support pour sacoches de bicyclettes, de motocyclettes ou analogues, où au moins un clip de fixation (20) doit être disposé contre la sacoche ; où le clip de fixation peut se refermer autour d'une baguette d'un porte-bagage, autour du guidon ou d'une autre entretoise de la bicyclette, de la motocyclette ou analogues ; et où le clip de fixation peut, contre la force d'un ressort (29), être détaché de la baguette du porte-bagage, ou du guidon, ou d'une autre entretoise ; caractérisé en ce que le clip de fixation (20) saisit la baguette, ou le guidon ou l'entretoise, avec un crochet de retenue (21), sur son côté opposé à la sacoche ; que le clip de fixation (20) comporte un crochet à déclic (24), qui est logé de façon à pouvoir tourner autour d'un axe ou d'un ou deux tronçons d'axe, contre la force du ressort (29), et qui, sous l'action de la force de ressort, entoure la baguette ou le guidon, par en-bas, à partir du côté de la sacoche ; que le crochet à déclic (24) est, sur son côté en regard de la sacoche, relié à une sangle (10), une poignée ou analogues ; et que, sous l'effet d'une traction exercée sur la sangle (10), la poignée ou analogues, on exerce une force sur le ressort (29), et le crochet à déclic (24) se déplace autour de l'axe ou du ou des tronçons d'axe, contre le clip de fixation (20), et dégage la baguette ou le guidon.

2. Support selon la revendication 1, caractérisé en ce que le ressort (29) est un ressort à branches ou à lames ou un élément élastique, ou analogues, qui s'appuie d'une part contre le clip de fixation (20) et d'autre part contre le crochet à déclic (24).

3. Support selon la revendication 1 ou 2, caractérisé en ce que le crochet à déclic (24) comporte sur sa face inférieure un chanfrein de départ, qui est orienté de façon que, à l'état fermé, une force agissant par endessous sur le chanfrein de départ, par exemple lors de la mise en place sur une baguette, un guidon ou une autre entretoise, fait tourner le crochet à déclic (24) en sens inverse, contre la force du ressort (29).

4. Support selon la revendication 1, caractérisé en ce que le clip de fixation (20), sur son côté opposé à la baguette, au guidon ou à l'entretoise, se poursuit par deux branches (21', 21''), disposées à une certaine distance l'une de l'autre, et que le crochet à déclic (24) est logé en rotation entre les branches (21', 21'').

5. Support selon la revendication 1, caractérisé en ce que la sangle (10), ou une étoffe, ou analogues, de la poignée, est fixé dans une fente (25) aménagée dans le crochet à déclic (24), à l'aide d'une vis plastique auto-taraudeuse.

6. Support selon la revendication 1 ou 4, caractérisé en ce que le clip de fixation se prolonge, sur son côté en regard de la sacoche, par une pièce d'arrêt (22), que la sacoche comporte un rail d'arrêt (30), dirigé parallèlement à la baguette, au guidon ou à l'entretoise, et que la pièce d'arrêt (22) est fixée dans un évidement (31) aménagé dans le rail d'arrêt (30).

7. Support selon la revendication 6, caractérisé en ce que la pièce d'arrêt (22) comporte un trou (23), et que la fixation au rail d'arrêt (30) est réalisée à l'aide d'une vis, qui, en passant par le trou (23), pénètre dans l'évidement (31) aménagé dans le rail (30), et y est vissée à l'aide d'un écrou (36).

8. Support selon la revendication 7, caractérisé en ce que le rail (30) est un profil creux approximativement semi-circulaire, dont le côté ouvert est dirigé contre la sacoche ; que le profil creux comporte des nervures de renforcement internes (35) ; et que l'écrou (36), avec des éléments de collerette repliés (37), prend en arrière des nervures de renforcement (35).

9. Support selon la revendication 8, caractérisé en ce que l'évidement (31) aménagé dans le rail d'arrêt (30) est un trou longitudinal.

10. Support selon la revendication 6, caractérisé en ce que le rail d'arrêt (30) comporte au niveau de son arête supérieure une traverse d'arrêt (32) ; que le clip de fixation (20) comporte, dans la zone de sa transition avec la pièce d'arrêt (22), une griffe d'arrêt (27) ; et que la griffe d'arrêt (27) saisit la traverse d'arrêt (32) quand le clip de fixation (20) est fixé au rail d'arrêt (30).

11. Support selon la revendication 1, caractérisé en ce que la sangle (10), la poignée ou analogues, est reliée à deux clips de fixation (20), disposés à une certaine distance l'un de l'autre.
